# EUROPEAN PATENT SPECIFICATION

(11) **EP 4 580 866 B1**
(45) Date of publication and mention of the grant of the patent: **17.06.2026**
(21) Application number: 23754441.6
(22) Date of filing: 01.08.2023
(51) Int. Cl.: B29C 70/44, B29C 33/52, B29C 33/76

(54) **SYSTEM FOR PRODUCING JUNCTION-LESS CARBON FIBER ELEMENTS AND OPERATING METHOD**
ANLAGE ZUR HERSTELLUNG VON ÜBERGANGSLOSEN CARBONFASERELEMENTEN UND BETRIEBSVERFAHREN
SYSTÈME DE PRODUCTION D'ÉLÉMENTS DE FIBRE DE CARBONE SANS JONCTION ET PROCÉDÉ DE FONCTIONNEMENT

(30) Priority: 31.08.2022 IT 202200017862
(43) Date of publication of application: 09.07.2025
(73) Proprietor: A.R.S. Tech S.r.l., 65127 Pescara (PE) (IT)
(72) Inventor: PIERANTOZZI, Umberto, 65127 Pescara (PE) (IT)
(74) Representative: Fiammenghi, Eva
(86) International application number: PCT/IB2023/057796
(87) International publication number: WO 2024/047428

(56) References cited:
- WO-A2-98/54046
- CN-A- 108 973 160
- US-A1- 2005 206 043

## Description

### Field of the invention

The invention relates to the production of individual components up to the production of entire frames for the automotive, racing, rail and air transport sectors. Even more specifically, the invention is adapted to provide a system for the production of geometrically complex structures in laminated carbon fiber which are whole junction-less pieces, and the relative operating method.

### Prior art

Monocoque, also called structural skin, is a structural system in which loads are supported by the outer skin of an object, similar to an eggshell. Initially used for boats, an actual monocoque carries both tensile and compressive forces within the structural mesh and can be recognized by the absence of a load-bearing internal frame. Few metal aircraft other than those with milled skins can be considered strictly monocoque, as they use a metal shell or reinforced canvas with frames riveted to the monocoque.

To date, the large steps forward in terms of production technologies and the use of carbon fiber and composite materials have made it possible to use monocoque structures more and more frequently in various technological sectors.

There are many examples of patents that deal with proposing solutions to problems of various kinds connected to the production and technology behind monocoque frames.

An example is the object of patent application EP3689717A1 to S. YONEZAWA, H. HYODO and T. ODA. The invention relates to a monocoque structure for a vehicle. The invention provides that the monocoque body and the sub-frame are formed of reinforced resin. The auxiliary frame is composed of a lower and an upper portion in which the lower portion is fixed to the monocoque structure and extends into the rear part of the vehicle. The upper portion, on the other hand, extends upwards and acts as a support for the motor which is mounted directly on its rear surface.

Another example is the object of the patent application EP3556650A1 to M.M. TORRES. The invention relates to a method for manufacturing reinforced monocoque structures and composite structures. The method involves using partially hardened composite base components and joining the components together by applying a composite coating over them and heating the assembly. The heating of the joint allows obtaining the complete hardening of the materials and generating a single reinforced structure. The base components therefore act as a mold during the manufacturing process, preventing the need to use molds on which the composite material is deposited which must subsequently be removed from the final structure obtained.

A composite material is the combination of two or more constituents and has different features from those of its components taken individually, in fact material properties such as resistance, efficiency and sealing are increased. Composites are made of a reinforcing material (a fiber or particle) held together by a matrix (polymer, metal or ceramic). Carbon fiber is one of the most commonly used composites, especially for making aircraft, racing cars and bicycles. This is because it is nearly four times stronger and stiffer than aluminum, and 40% lighter. The fibers can be unidirectional and strategically aligned to create a force relative to a single vector, or crossed, so as to generate force in multiple vectors and give the surfaces the reticulated appearance typical of composite material parts. Parts are often produced using a combination of these two methods.

The production of carbon fiber reinforced polymers is a highly skilled and labor intensive process and is used in both one-off and batch production. Cycle times vary from one hour to 150 hours depending on the size and complexity of the part to be made. In FRP manufacturing, continuous fibers are usually joined within the matrix to form individual layers, which are then laminated one by one onto the final part.

The final features of the composite are due both to the materials used and to the lamination process as the way in which the fibers are incorporated profoundly affects the performance of the part. The forming of the thermosetting resins and the relative reinforcement is carried out inside a tool or a mold. Then the materials are cured to form a robust product. There are a variety of lamination techniques, which can be grouped into three main types: wet lay-up , pre-preg lamination, and resin transfer molding (RTM).

In wet lay-up, the fiber is cut and laid out inside the mold, then the resin is applied with a brush, roller or spray gun. This method requires very specific skills to create high quality parts, but it is also the least expensive workflow.

In the pre-preg lamination process, the fiber is previously impregnated with resin. Sheets of pre-preg fiber (hence pre-preg) are stored in the cold to prevent premature curing thereof. The layers are then cured within the mold by means of heat and pressure in an autoclave. This process provides greater accuracy and repeatability, since the amount of resin is measured, but it is the most expensive technique, usually used for high performance applications.

In RTM molding, the dry fiber is placed into a two-part mold. The mold is closed and high pressure resin is injected into it. It is a process usually automated and used for large-scale production.

In the realization of unique carbon fiber components, the autoclave polymerization process is known in the prior art and there are many inventions that have dealt with providing different methods for producing carbon fiber elements through the treatment in an autoclave, in order to obtain ever less energy-intensive and more efficient processes.

An example is the object of patent application CN108582815A to Y. GU, X. DAI, M. LIU, J. YAO, B. LIU, H. SHAO. The invention describes a method of molding carbon fiber composite material in an autoclave characterized by a mold with a heating system.

US2005/206043 discloses the features of the preamble of claim 1.

A molding method by inner heating of the mold is adopted. The method of molding carbon fiber composite material in an autoclave provides that the mold enters an autoclave; that the mold is vacuum packed; that the autoclave is pressurized; that the mold is heated; that the mold release and molding are conducted. According to the method, due to the design of the mold with the heating system and a pressurization system, a carbon fiber composite material to be molded can be directly heated through the mold, the heating efficiency can be greatly improved, the consumption of energy is reduced and the production efficiency of the products is improved.

The inventions mentioned so far by way of example only and not exhaustive, are representative of the inventive-technological framework available today.

The object of the present invention is to provide a system and a method for producing whole elements in composite material with laminated carbon fiber on a disposable male mold and a single curing cycle in an autoclave, capable of obtaining a single junction-less piece in order to guarantee greater structural resistance, lower weight and reduced production times.

### Description of the invention

According to the present invention, a system is provided for producing junction-less carbon fiber elements through a single cycle in an autoclave and the relative operating method.

Referred to as "pre-preg" or "pre-impregnated" are reinforcing fabrics or fibers that have been machine-impregnated with a pre-catalyzed resin system. The reinforcement is ready for deposition in a mold without the addition of resins through the classic production processes such as manual lamination, infusion or injection. Once the positioning of the pre-preg in the mold has been completed, the resin contained reticulates completely by heating it to the prescribed temperature, thus following the curing cycle indicated in the specific technical data sheet. The quantity of resin present in the fibers is declared directly by the manufacturer, as are the final features of the composite laminate.

The invention describes the production of an innovative male mold using a combined structure of molds and air chambers. The male mold is a disposable mold as it is made with a casting process of a material with a melting point such as to guarantee easy processing at room temperature, and easy liquefaction and removal of the same at higher temperatures but in any case such as to prevent the triggering of excessive expansion or thermal alterations of the carbon fiber element to be made.

The basic system therefore comprises a casting mold through which to make the male mold, an air chamber and a female mold.

The system, on the other hand, is well suited to the creation of junction-less monocoque frames, in this case it includes some additional elements such as a longitudinal member which is hooked to a support structure which allows it to be maneuvered in an automated, semi-automated or also manual mode. When the geometry and the volume of the frame or in general of the element to be made require it, a system of filler elements is mounted on the longitudinal member which has mainly two purposes which are: one the reduction of the volume of casting material used for the construction of the male mold by casting, and the second, the reduction of the possibility of developing thermal inertia in the male mold during the thermal cycle in the autoclave. The presence of the system of filler elements therefore allows a crust to be created by casting which forms the outer surface of the male mold and allows speeding up the curing cycle of the laminate and ensuring the dimensional accuracy of the outer surface of the mold.

For the production of elements such as a monocoque frame, the operating method of the system in fact provides for fitting an air chamber on the male mold generated by casting. This air chamber is then vacuumed adhering to the male mold and allowing for surface lamination of pre-impregnated carbon fiber templates. The lamination step can be assisted by a laser pointing system which projects the position of the carbon fiber templates to be positioned directly onto the surface of the air chamber, thus reducing the possibility of error and allowing greater automation of the process.

However, the operating method can be divided into different steps, based on the type of carbon fiber element to be made, its geometry and its dimensions. The method can in fact provide that the casting mold is first arranged, and that the air chamber is inserted inside it and pressurized. The casting material is then cast inside the air chamber to make the male mold. In this step, if necessary, the above filler elements can be added. In this sequence of actions it is possible to notice that the longitudinal member, as well as the support structure of the same, are not fundamental for the realization of the element. Once the casting material has hardened, the casting mold is removed and the air chamber is already fitted to the male mold. This is then depressurized to adhere perfectly to the male mold and to allow the subsequent lamination steps of the pre-impregnated carbon fibers.

According to one sequence of operations or the other, the method therefore provides for the application on the laminated carbon fibers of an assembled female mold which, the entire system composed of the male mold, laminated carbon fibers and female mold is brought to the autoclave.

The innovation of the process manages to guarantee the need to carry out a single cycle in the autoclave by dissolving the male mold, whose casting material, in a fluid state, is thus directed and channeled towards a predefined escape route, allowing greater process safety.

In the autoclave the male mold is therefore lost, but the pressure of the air which is blown inside the air chamber guarantees the maintenance of the final shape by virtue of the pressure of the air chamber against the outer female mold. The pre-impregnated carbon fibers thus finish their polymerization creating a geometrically complex composite structure that is a monocoque frame that does not require further processing, which requires a single cycle in the autoclave, which has reduced lamination times, which does not have overlapping due to junctions and which therefore has a lower weight and an improved mechanical resistance guaranteed by the structural continuity.

The advantages offered by the present invention are clear in the light of the above description and will be even clearer from the accompanying figures and the related detailed description.

### Description of the figures

The invention will hereinafter be described in at least a preferred embodiment thereof by way of non-limiting example with the aid of the accompanying figures, in which:
- FIGURE 1 shows some detail views of said system for producing junction-less carbon fiber elements 100 for example for the production of a monocoque frame;
- FIGURE 2 shows a view of the operating method 200 of said system for producing junction-less carbon fiber elements 100.

### Detailed description of the invention

The present invention will now be described purely by way of non-limiting or binding example with the aid of the figures, which illustrate some embodiments relative to the present inventive concept.

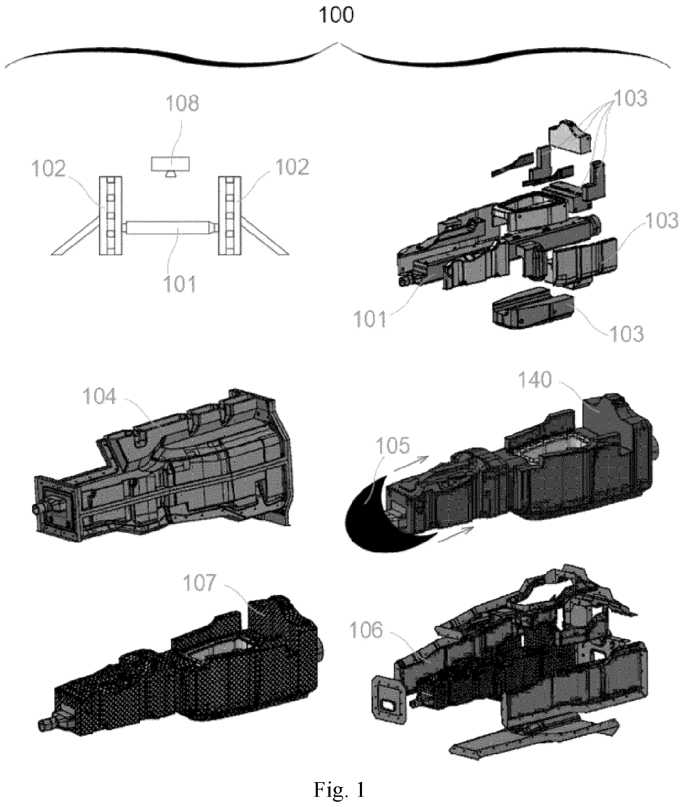

With reference to FIGS. 1, some detail views of said system for producing junction-less carbon fiber elements 100 for example for the production of a monocoque frame according to the present invention are shown. FIG. 1, as in the following description, the embodiment of the present invention considered to be the best to date is illustrated.

Said system for producing junction-less carbon fiber elements 100, adapted for being employed for the realization of a geometrically complex composite material structure 1 represented by a monocoque frame in FIG. 1, comprising a longitudinal member 101, a support structure 102, a system of filler elements 103, at least a casting mold 104, a male mold 140, at least an air chamber 105, at least a female mold 106, templates of pre-impregnated carbon fiber 107, a laser pointing system 108.

Said longitudinal member 101 is maintained by said support structure 102 adapted to also allow the axial rotation thereof. The system of filler elements 103 is hooked to said longitudinal member 101 and adapted to occupy a large part of the volume of the shape of said geometrically complex composite structure 1. Said casting mold 104 is adapted to be arranged on said system of filler elements 103 and on said longitudinal member 101 to allow a casting of casting material 2 for the realization of said disposable male mold 140.

Said air chamber 105 corresponds to the mold surface or to the inner surface of said geometrically complex composite structure 1 and is fitted onto said male mold 140 to then adhere thereto under vacuum. Said at least a female mold 106 is adapted for being positioned on said air chamber 105 on which said templates of pre impregnated carbon fibers 107 have been arranged, and for realizing a support structure for the lamination process.

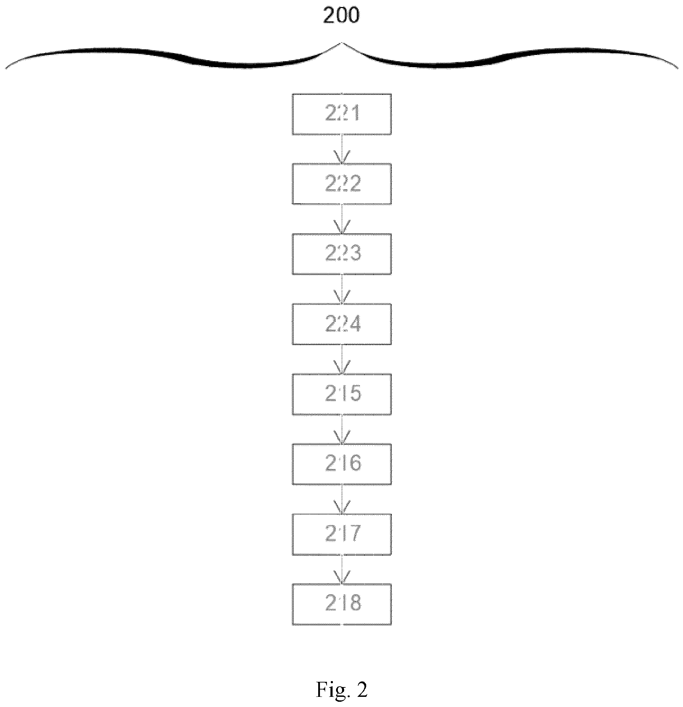

With reference to FIG. 2, a view of said operating method 200 of said system for producing junction-less carbon fiber elements 100 is shown. Said operating method 200 will be described with reference to FIGS. 1 and 2.

Said operating method 200 is adapted to exploit said system for the production of junction-less carbon fiber elements 100 according to the following steps, a design step, an analysis step of the volume distributions, an element positioning step, a male mold realization step, an application step, a depressurization step, a lamination step 215, a female mold positioning step 216, a single autoclave cycle step 217, a component extraction step 218, a mold positioning step 221, an air chamber insertion and pressurization step 222, a casting step to realize a male mold 223, a mold removal and depressurization step 224.

Said design step is adapted to provide the choice of the optimal sequence of operations to be performed for the realization of said geometrically complex composite structure 1 on the basis of its geometry, exploiting the system. Said design step leads the operating method 200 to adopt a sequence of steps or through which to exploit the system.

According to a sequence of steps of said operating method 200, the method 200 begins with said analysis step of the volume distributions adapted for providing an analysis of the volume distributions of said geometrically complex composite structure 1. Said analysis step of the volume distributions has a positive or negative outcome. When the volume distribution of said geometrically complex composite structure 1, to be created, is such as to require the use of said filler elements 103, the outcome is positive and the operating method 200 proceeds with an element positioning step. When, on the other hand, said geometrically complex composite structure 1 is such that it can be made without using said fillers 103, the outcome is negative and said operating method 200 proceeds with a male mold realization step. Said element positioning step provides for the positioning of said filler element system 103 on said longitudinal member 101. Said male mold realization step provides for the casting of said casting material 2 into said casting mold 104, and for the removal of said casting mold 104 after the disposable male mold 140 has dried. Said application/covering step provides that said male mold 140 is covered by said air chamber 105 that is applied thereon, the latter being airtight at the ends of said longitudinal member 101. In said depressurization step, said air chamber 105 is placed under a vacuum in order to make it adhere perfectly to said male mold 140. In said lamination step 215, said templates of pre impregnated carbon fibers 107 are positioned onto said air chamber 105 while the latter adheres to said male mold 140. In said female mold positioning step 216, said female mold 106 is positioned onto said templates of pre impregnated carbon fibers 107 which are arranged in turn on said air chamber 105. Said single autoclave cycle 217 provides a pressurization of said air chamber 105 which consequently squeezes/presses said templates of pre impregnated carbon fibers 107, which undergo polymerization, against an inner wall of said female mold 106. In said step of components removal 218, said female mold 106 is removed, said system of filler elements 103, if present, is removed/disengaged, and said air chamber 105 is extracted from a dedicated opening, thereby obtaining said junction-less geometrically complex composite material structure 1 formed by said templates of pre impregnated carbon fibers 107 that have undergone polymerization in the autoclave.

In a preferred sequence of steps, said operating method 200 (FIG. 2) begins with said mold positioning step 221 in which said casting mold 104 is arranged. It then continues with said air chamber insertion and pressurization step 222, in which said air chamber 105 is introduced into said casting mold 104, and is pressurized in order to let it adhere to the latter's inner walls. This is followed by said casting step 223 to realize a male mold, in which said casting material 2 is directly cast in the interior of said pressurized air chamber 105 and is dried to obtain said male mold 140. In said mold removal and depressurization step 224, said casting mold 104 is removed, and said air chamber 105 is depressurized in order to let it adhere to said male mold 140. The method 200 continues at this point with said lamination step 2154, said female mold positioning step 216, said step of single autoclave cycle 217 and said step of components removal 218.

Finally, it is clear that modifications, additions or variants may be made to the invention described thus far which are apparent to those skilled in the art, without departing from the scope of protection that is provided by the appended claims.

## Claims

1. A system for producing junction-less carbon fiber elements (100), adapted for being employed for the realization of a geometrically complex composite material structure (1) that is a monocoque frame, through a single autoclave cycle, comprising:
- at least a casting mold (104) adapted for allowing the casting of casting material (2) having a melting point that ensures a facilitated processing at ambient temperature, and easy melting and removal of the same at higher temperatures and such as to prevent the triggering/initiation of excessive thermal expansions and alterations of said geometrically complex composite material structure (1), in order to realize a male mold (140);
- at least an air chamber (105) that corresponds to the mold surface or the inner surface of said geometrically complex composite material structure (1);
- at least a female mold (106) adapted for being positioned on said air chamber (105) on which templates of pre impregnated carbon fibers (107) have been arranged, and adapted for realizing a support for a lamination process; **characterized by**
- a longitudinal member (101), configured to provide a rotatable support on which further elements are mountable;
- a support structure (102), adapted for providing a support for said longitudinal member (101) and allowing axial rotation thereof that may be automatic, semiautomatic, or manual;
- a system of filler elements (103) hooked to said longitudinal member (101), adapted for filling/occupying part of the volume distribution of the silhouette of said geometrically complex composite material structure (1), and adapted for being thermally stable during the working processes.

2. A system for producing junction-less carbon fiber elements (100), according to the preceding claim wherein the overall volume of said system of filler elements (103) reduces the amount of said casting material (2) to be employed in said male mold (140), for reducing a possible occurrence of thermal inertias in the male mold (140) during the autoclaving cycle, and therefore is adapted for allowing the speeding up and a greater accuracy in the working processes while ensuring at the same time an optimal control over thermal expansions.

3. A system for producing junction-less carbon fiber elements (100), according to anyone of the preceding claims, wherein it is advantageously arranged for the implementation of a laser pointing system (108) which is configured in such a way as to avoid errors during the positioning of said casting mold (104), said templates of pre impregnated carbon fibers (107) and/or of said female mold (106); wherein said laser pointing system (108) is adapted to project laser guides onto the surface of said male mold (140) in order to ensure an improved process automation and efficiency.

4. A method (200) for operating said system for producing junction-less carbon fiber elements (100), according to anyone of the preceding claims making use of the system according to the following steps:
- mold positioning step (221), in which said casting mold (104) is prepared/provided;
- an air chamber insertion and pressurization step (222), in which said air chamber (105) is introduced into said casting mold (104), and is pressurized in order to let it adhere to the latter's inner walls;
- a casting step (223) to realize a male mold, in which said casting material (2) is directly cast in the interior of said pressurized air chamber (105) and is dried to obtain said male mold (140);
- mold removal and depressurization (224); a step in which said casting mold (104) is removed, and said air chamber (105) is depressurized in order to let it adhere to said male mold (140);
- a lamination step (215), in which said templates of pre impregnated carbon fibers (107) are positioned onto said air chamber (105) while the latter adheres to said male mold (140);
- a female mold positioning step (216) in which said female mold (106) is positioned onto said templates of pre impregnated carbon fibers (107) which are arranged on said air chamber (105);
- a step of single autoclave cycle (217) adapted for providing a pressurization of said air chamber (105) which consequently squeezes/presses said templates of pre impregnated carbon fibers (107), which undergo polymerization, against an inner wall of said female mold (106);
- a step of components removal (218), in which said female mold (106) is removed, said system of filler elements (103), if present, is removed/disengaged, and said air chamber (105) is extracted from a dedicated opening, thereby obtaining said junction-less geometrically complex composite material structure (1) formed by said templates of pre impregnated carbon fibers (107) that have undergone polymerization in the autoclave.

5. A method (200) for operating said system for producing junction-less carbon fiber elements (100), according to the preceding claim 4, wherein said casting material (2), which melts during said single autoclave cycle (217), is guided and channeled towards a predefined outlet passage, thus ensuring an increased safety for the process under temperature.

6. A method (200) for operating said system for producing junction-less carbon fiber elements (100), according to anyone of the preceding claims 4 or 5, wherein said air chamber insertion and pressurization step (222) can also include the insertion of said system of filler elements (103) within said pressurized air chamber (105).

## Patentansprüche

1. System zur Herstellung von übergangslosen Carbonfaserelementen (100), das dazu ausgelegt ist, zur Realisierung einer geometrisch komplexen Verbundwerkstoffstruktur (1) in Form eines Monocoque-Rahmens eingesetzt zu werden, durch einen einzigen Autoklavenzyklus, das folgende Eigenschaften aufweist:
- zumindest eine Gussform (104), die dazu ausgelegt ist, das Gießen von Gussmaterial (2) mit einem Schmelzpunkt, der eine vereinfachte Verarbeitung bei Umgebungstemperatur sowie ein leichtes Schmelzen und Entfernen desselben bei höheren Temperaturen gewährleistet, zu ermöglichen und um das Auslösen/die Entstehung übermäßiger thermischer Ausdehnungen und Veränderungen der geometrisch komplexen Verbundwerkstoffstruktur (1) zu verhindern, um eine Patrize (140) zu realisieren;
- zumindest eine Luftkammer (105), die der Formoberfläche oder der Innenfläche der geometrisch komplexen Verbundwerkstoffstruktur (1) entspricht;
- zumindest eine Negativform (106), die dazu ausgelegt ist, auf der Luftkammer (105) positioniert zu werden, auf der Vorlagen aus vorimprägnierten Carbonfasern (107) angeordnet wurden, und die zum Realisieren einer Stütze für einen Laminierungsprozess ausgelegt ist; **gekennzeichnet durch**
- ein Längselement (101), das dazu ausgebildet ist, eine drehbare Halterung, an der weitere Elemente montierbar sind, bereitzustellen;
- eine Haltestruktur (102), die zum Bereitstellen einer Halterung für das Längselement (101) und zum Ermöglichen einer axialen Drehung hiervon, die automatisch, halbautomatisch oder manuell sein kann, ausgelegt ist;
- ein System von Füllelementen (103), die an dem Längselement (101) eingehängt sind, die dazu ausgelegt sind, einen Teil der Volumenverteilung der Silhouette der geometrisch komplexen Verbundwerkstoffstruktur (1) auszufüllen/einzunehmen, und die dazu ausgelegt sind, während der Arbeitsprozesse thermisch stabil zu sein.

2. System zur Herstellung von übergangslosen Carbonfaserelementen (100) gemäß dem vorstehenden Anspruch 1, wobei das Gesamtvolumen des Systems von Füllelementen (103) die Menge des in der Patrize (140) einzusetzenden Gussmaterials (2) verringert, um ein mögliches Auftreten von thermischen Trägheiten in der Patrize (140) während des Autoklavierzyklus zu verringern, und somit dazu ausgelegt ist, die Beschleunigung und eine höhere Genauigkeit in dem Arbeitsprozessen zu ermöglichen und gleichzeitig eine optimale Kontrolle über thermische Ausdehnungen zu gewährleisten.

3. System zur Herstellung von übergangslosen Carbonfaserelementen (100) gemäß einem der vorstehenden Ansprüche, wobei es vorteilhafterweise zur Implementierung eines Laserzeigesystems (108), das dazu ausgebildet ist, Fehler während des Positionierens der Gussform (104), der Vorlagen aus vorimprägnierten Carbonfasern (107) und/oder der Matrize (106) zu vermeiden, ausgelegt ist; wobei das Laserzeigesystem (108) dazu ausgelegt ist, Laserführungen auf die Oberfläche der Patrize (140) zu projizieren, um eine verbesserte Prozessautomatisierung und -effizienz sicherzustellen.

4. Verfahren (200) zum Betreiben des Systems zur Herstellung von übergangslosen Carbonfaserelementen (100) gemäß einem der vorstehenden Ansprüche, das das Systems gemäß den folgenden Schritten verwendet:
- Formpositionierungsschritt (221), bei dem die Gussform (104) vorbereitet/bereitgestellt wird;
- einen Luftkammer-Einsetz- und Unterdrucksetzungsschritt (222), bei dem die Luftkammer (105) in die Gussform (104) eingesetzt wird und unter Druck gesetzt wird, um sie an den Innenwänden von letzterer anhaften zu lassen;
- einen Gießschritt (223), um eine Patrize zu realisieren, bei dem das Gussmaterial (2) direkt in das Innere der unter Druck gesetzten Luftkammer (105) gegossen wird und getrocknet wird, um die Patrize (140) zu erhalten;
- Formentfernung und Druckablassen (224); ein Schritt, bei dem die Gussform (104) entfernt wird und die Luftkammer (105) drucklos gemacht wird, um sie an der Patrize (140) anhaften zu lassen;
- einen Laminierungsschritt (215), bei dem die Vorlagen aus vorimprägnierten Carbonfasern (107) auf der Luftkammer (105) positioniert werden, während die letztere an der Patrize (140) haftet;
- einen Negativform-Positionierungsschritt (216), bei dem die Negativform (106) auf den Vorlagen aus vorimprägnierten Carbonfasern (107), die auf der Luftkammer (105) angeordnet sind, positioniert wird;
- einen Schritt eines einzelnen Autoklavenzyklus (217), der zum Bereitstellen einer Druckbeaufschlagung der Luftkammer (105) ausgelegt ist, die infolgedessen Vorlagen aus vorimprägnierten Carbonfasern (107), die einer Polymerisation unterzogen werden, gegen eine Innenwand der Negativform (106) drückt/presst;
- einen Schritt der Komponenten-Entfernung (218), bei dem die Negativform (106) entfernt wird, das System aus Füllelementen (103), sofern vorhanden, entfernt/gelöst wird und die Luftkammer (105) durch eine dafür vorgesehene Öffnung entnommen wird, wodurch die übergangslose, geometrisch komplexe Verbundwerkstoffstruktur (1) erhalten wird, die durch die Vorlagen aus vorimprägnierten Carbonfasern (107), die in dem Autoklaven eine Polymerisation durchlaufen haben, gebildet ist.

5. Verfahren (200) zum Betreiben des Systems zur Herstellung von übergangslosen Carbonfaserelementen (100) gemäß dem vorstehenden Anspruch 4, wobei das Gussmaterial (2), das während des einzelnen Autoklavenzyklus (217) schmilzt, in Richtung eines vordefinierten Auslasskanals geleitet und kanalisiert wird, wodurch eine erhöhte Sicherheit für den Prozess unter Temperatur gewährleistet wird.

6. Verfahren (200) zum Betreiben des Systems zur Herstellung von übergangslosen Carbonfaserelementen (100) gemäß einem der vorstehenden Ansprüche 4 oder 5, wobei der Luftkammer-Einsetz- und Unterdrucksetzungsschritt (222) auch das Einsetzen des Systems von Füllelementen (103) in die unter Druck gesetzte Luftkammer (105) beinhalten kann.

## Revendications

1. Système de production d'éléments en fibres de carbone sans jonction (100), adapté pour être employé pour la réalisation d'une structure en matériau composite géométriquement complexe (1) qui est un châssis monocoque, par le biais d'un unique cycle d'autoclave, comprenant :
- au moins un moule de coulée (104) adapté pour permettre la coulée d'un matériau de coulée (2) ayant un point de fusion qui garantit un traitement facilité à température ambiante, et une fusion et un retrait faciles de celui-ci à des températures plus élevées et de façon à empêcher le déclenchement/l'initiation de dilatations thermiques excessives et d'altérations de ladite structure en matériau composite géométriquement complexe (1), afin de réaliser un moule mâle (140) ;
- au moins une chambre à air (105) qui correspond à la surface de moule ou à la surface interne de ladite structure en matériau composite géométriquement complexe (1) ;
- au moins un moule femelle (106) adapté pour être positionné sur ladite chambre à air (105) sur laquelle des gabarits de fibres de carbone pré-imprégnées (107) ont été agencés, et adapté pour réaliser un support pour un traitement de stratification ; **caractérisé par**
- un longeron (101), configuré pour fournir un support rotatif sur lequel des éléments supplémentaires sont aptes à être montés ;
- une structure de support (102), adaptée pour fournir un support pour ledit longeron (101) et permettre une rotation axiale de celui-ci qui peut être automatique, semi-automatique ou manuelle ;
- un système d'éléments de remplissage (103) accrochés audit longeron (101), adaptés pour remplir/occuper une partie de la distribution de volume de la silhouette de ladite structure en matériau composite géométriquement complexe (1), et adaptés pour être thermiquement stables pendant les traitements de travail.

2. Système de production d'éléments en fibres de carbone sans jonction (100) selon la revendication 1 précédente, dans lequel le volume global dudit système d'éléments de remplissage (103) réduit la quantité dudit matériau de coulée (2) devant être employée dans ledit moule mâle (140), pour réduire une éventuelle survenue d'inerties thermiques dans le moule mâle (140) pendant le cycle d'autoclave, et par conséquent est adaptée pour permettre une accélération et une plus grande précision dans les traitements de travail tout en garantissant dans le même temps une maîtrise optimale des dilatations thermiques.

3. Système de production d'éléments en fibres de carbone sans jonction (100) selon l'une quelconque des revendications précédentes, dans lequel il est avantageusement agencé pour la mise en œuvre d'un système de pointage laser (108) qui est configuré de manière à éviter des erreurs pendant le positionnement dudit moule de coulée (104), desdits gabarits de fibres de carbone pré-imprégnées (107) et/ou dudit moule femelle (106) ; dans lequel ledit système de pointage laser (108) est adapté pour projeter des guides laser sur la surface dudit moule mâle (140) afin de garantir une automatisation et une efficacité de traitement améliorées.

4. Procédé (200) de fonctionnement dudit système de production d'éléments en fibres de carbone sans jonction (100) selon l'une quelconque des revendications précédentes, utilisant le système selon les étapes suivantes :
- une étape de positionnement de moule (221), dans laquelle ledit moule de coulée (104) est préparé/ménagé ;
- une étape d'insertion et de mise sous pression de chambre à air (222), dans laquelle ladite chambre à air (105) est introduite dans ledit moule de coulée (104), et est mise sous pression afin de la laisser adhérer aux parois internes de ce dernier ;
- une étape de coulée (223) pour réaliser un moule mâle, dans laquelle ledit matériau de coulée (2) est directement coulé dans l'intérieur de ladite chambre d'air (105) mise sous pression et est séché pour obtenir ledit moule mâle (140) ;
- un retrait et une dépressurisation de moule (224) ; une étape dans laquelle ledit moule de coulée (104) est retiré, et ladite chambre à air (105) est dépressurisée afin de la laisser adhérer audit moule mâle (140) ;
- une étape de stratification (215), dans laquelle lesdits gabarits de fibres de carbone pré-imprégnées (107) sont positionnés sur ladite chambre à air (105) tandis que cette dernière adhère audit moule mâle (140) ;
- une étape de positionnement de moule femelle (216) dans laquelle ledit moule femelle (106) est positionné sur lesdits gabarits de fibres de carbone pré-imprégnées (107) qui sont agencés sur ladite chambre à air (105) ;
- une étape de cycle d'autoclave unique (217) adaptée pour fournir une mise sous pression de ladite chambre à air (105) qui par conséquent écrase/presse lesdits gabarits de fibres de carbone pré-imprégnées (107), qui subissent une polymérisation, contre une paroi interne dudit moule femelle (106) ;
- une étape de retrait de composants (218), dans laquelle ledit moule femelle (106) est retiré, ledit système d'éléments de remplissage (103), le cas échéant, est retiré/désolidarisé, et ladite chambre à air (105) est extraite par une ouverture dédiée, ce qui permet d'obtenir ladite structure en matériau composite géométriquement complexe (1) sans jonction formée par lesdits gabarits de fibres de carbone pré-imprégnées (107) qui ont subi une polymérisation dans l'autoclave.

5. Procédé (200) de fonctionnement dudit système de production d'éléments en fibres de carbone sans jonction (100) selon la revendication 4 précédente, dans lequel ledit matériau de coulée (2), qui fond pendant ledit cycle d'autoclave unique (217), est guidé et canalisé vers un passage de sortie prédéfini, garantissant ainsi une sécurité accrue pour le traitement sous température.

6. Procédé (200) de fonctionnement dudit système de production d'éléments en fibres de carbone sans jonction (100) selon l'une quelconque des revendications 4 ou 5 précédentes, dans lequel ladite étape d'insertion et de mise sous pression de chambre à air (222) peut également inclure l'insertion dudit système d'éléments de remplissage (103) au sein de ladite chambre à air mise sous pression (105).
